Europäisches Patentamt

**European Patent Office**

Office européen des brevets

(11) Publication number: **0 013 723**
**B1**

(12) **EUROPEAN PATENT SPECIFICATION**

(45) Date of publication of patent specification: **23.09.81**  (51) Int. Cl.³: **A 23 K 1/20**

(21) Application number: **79104974.5**

(22) Date of filing: **06.12.79**

(54) Method for producing non-caking lignosulfonate based binders for pelleting of animal feedstuffs.

| | |
|---|---|
| (30) Priority: **29.01.79 FI 790288** | (73) Proprietor: **G.A. SERLACHIUS OY**<br>**F-35800 MÄNTTÄ (FI)** |
| (43) Date of publication of application:<br>**06.08.80 Bulletin 80/16** | (72) Inventor: **Ashorn, Theodore Heinrich Gustave**<br>**Lielahti B 20**<br>**33400 Tampere 40 (FI)** |
| (45) Publication of the grant of the European patent:<br>**23.09.81 Bulletin 81/38** | (74) Representative: **Bartels, Hans et al,**<br>**Bartels, Brandes, Held, Wolff Patentanwälte** |
| (84) Designated Contracting States:<br>**AT BE CH DE FR GB IT NL SE** | **Thierschstrasse 8**<br>**D-8000 München 22 (DE)** |
| (56) References cited:<br>**DE - A1 - 2 749 108**<br>**DK - B - 131 966**<br>**GB - A - 1 339 830**<br>**US - A - 3 035 920** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method for producing non-caking lignosulfonate based binders for pelleting of animal feedstuffs

The present invention relates to a method for preparing non-caking lignosulfonate based binder for pelleting animal feedstuffs.

In recent years considerable effort has been directed to combining various types of animal feed ingredients into pellets and other artificially agglomerated feed forms to produce products of maximal palatability and handling characteristics. The binders currently being used on a large scale constitute various kinds of clays and dried sulfite spent liquors, cf. US-patent specification 3 035 920. More complex binder compositions have also been proposed, cf. FI-patent specifications 40 509 and 51 035.

Present day lignosulfonate based or lignosulfonate containing binders are hydroscopic and exhibit a more or less pronounced tendency to cake, which proves a severe problem to producers and consumers of the material. As the degree of caking relates directly to the moisture content and increases with increasing temperature and pressure, producers are compelled to:

—produce materials with very low moisture contents which are bulky in nature and therefore expensive to transport

—employ very effective and expensive cooling before placing the dried material into storage bins and

—avoid large and therefore economic storage bins to limit pressure.

A drawback from the consumer's point of view which restricts the use of available spent sulfite liquor preparations for animal feedbinder purposes is the fact that many binders not only cake but even liquify forming sticky sirups when in contact with the atmosphere. Accordingly, it is necessary to pack, deliver and store these products in moisture proof bags. However, because of handling problems and the additional costs incurred in the disposal of waste packing materials, bagged products are increasingly being rejected by modern feedstuffs mills geared to process hundreds of thousands of tons of materials every year.

Because of the afore mentioned drawbacks efforts have been made to reduce and/or eliminate the caking tendencies of sulfite spent liquor based binders, hitherto however, without very much success. One known procedure comprises compounding the binder with some 3 to 30% by weight of clay solids (SE-patent specification 320 568) or with substantially corresponding amounts of mineral type feed additives (DE—A—2 749 108). These additions act as diluents for the lignosulfonate, decreasing the effective contact surface between particles and thus reducing their sticking together. A disadvantage of the method according to the SE-patent specification 320 568 is, that the clay addition detracts from the nutritious value of the binder, whereas pre- blending of binder with other feed components presents a problem to the compounder as it restricts freedom of formulating ratios (DE—A— 2 749 108). Another currently practised procedure, also of limited effectiveness in preventing caking, employs the addition of lime to sulfite spent liquor before drying. For reasons apparent to those skilled in the art, such addition is very difficult to accomplish because it ultimately gives rise to precipitation of basic calcium lignosulfonate which severely complicates subsequent drying operation. A further limitation of treating spent sulfite liquor with lime prior to drying is that the compound reacts with the nutritious carbohydrates present in the sulfite spent liquor by reverting them to acidic products and others thereby reducing the inherent feed value of the binder as the lime content increases and its hydroscopicity decreases.

By means of the feed component prepared according to the invention the afore mentioned drawbacks relating to the caking of lignosulfonate based binders may be eliminated or, in other words, the handling characteristics of products exhibiting caking tendency may be substantially improved. The method according to the invention is characterised in that dried calcium, magnesium or sodium based residual pulping liquor obtained in the sulfite cooking of wood, or a mixture thereof, is compounded with such an amount of a calcium hydroxide and/or calcium oxide containing materials that the pH of a 5% aqueous solution of the blend is greater than 5, measured at room temperature. Such conditions serve to ensure sufficiently strong alkalinity at the particle interfaces to bring about the unique and beneficial effect of the binder according to the invention.

Preferably, however, in the method according to the invention sufficient basic calcium material is added to give a pH of 6 to 9, measured in a 5% aqueous solution, and the amount added, calculated as CaO, is preferably about 1 to 3% by weight, although the amount required may rise substantially higher, for example to about 10%, in case dusting is carried out using a coarse calcium material, or if there is a loss of alkalinity and soluble calcium due to calcium carbonate formation, for example when dusting in the presence of flue gases from the drier operation. Other conditions requiring larger additions of CaO than the preferred 1 to 3% by weight, are encountered when the dried lignosulfonate containing material to be treated exhibits a very low pH, for example less than 3. Correspondingly, the product pH need also be greater than the preferred 6 to 9, for example, when treating some type material containing low molecular weight lignosulfonates.

The inventive binders remain free-flowing even under adverse conditions of high relative humidity and contain virtually all the nutritious value of the original material prone to caking and finally produce a harder and more resilient pellet with increasing pH.

In principle any type of pulping liquor raw material may be used for the purpose of our invention limited only in that its combined level of $SO_2$ at any stage during the cooking process should have been of the order of 50% or less of total ("Lignins", K. Sarkanen & C. Ludwig, Wiley-Interscience, p. 598, 599). Moreover, the success of the invention is not dependent upon any other factor of the digestion process or based upon any particular type wood furnish. Likewise, any material containing free calcium hydroxide or oxide is suitable for the practice of our invention. However, for reasons apparent to those skilled in the art we prefer to work with relatively pure calcium hydroxide.

While compounding of the dried residual spent liquor and calcium material can be accomplished in numerous different ways, such as dry blending and milling, we prefer to integrate the dusting operation with the spray-drying of sulfite spent liquor by screw feeding extremely finely divided calcium material directly into the drying chamber or into the pneumatic transport system conveying dried sulfite spent liquor solids from the spray-drying chamber to the collection cyclones and on to the storage bins.

The inventive products differ from materials treated with lime in the liquid state in that their hygroscopicity remains virtually unchanged. While it is difficult to precisely explain the beneficial effect of the calcium containing material on reducing the caking tendency of powdered residual pulping liquor, it is speculated that the dry blending or dusting operation leads to a surface coating of the spent liquor particles. If and when the moisture content rises to sufficient levels the basic calcium material goes into action producing a localized protective film of insoluble basic calcium lignosulfonate and calcium sugar-complexes at the interphase which in turn poses an obstacle to the agglomeration of particles. Under conditions of pelleting, i.e. in the presence of steam, the protective layer is removed and the product functions in normal manner as a binder, the increased pH increasing the degree of neutralization of lignosulfonate and sugar components, thus yielding a substantially harder pellet.

Our observation that an increasingly more resilient and harder pellet is obtained with increasing product pH has an important practical consequence in that it allows decreasing the binder content in the feed. This effect may be related to the established reduced solubility of spent sulfite liquor comonents with increasing lime concentration. Thus when the hitherto used low-alkalinity products encounter steam during pelleting conditions they tend to dissolve more readily than the more basic products of our invention. Dissolved binder, however, will penetrate into the feed particles and can no longer contribute to glueing these particles together.

The present invention is thus based on the prior unknown principle that dried lignosulfonate matter can be rendered substantially less caking for purposes of storage, handling and transport by dusting it with a basic calcium material and that the dusting, most surprisingly, does not only not reduce but in fact improves substantially the binding properties of the lignosulfonate under conditions prevailing during animal feedstuff pelleting.

The following non-limiting Example is illustrative of the inventive process for reducing the caking tendency of binder material.

EXAMPLE:

Into the pneumatic transport system of a NIRO ATOMIZER model spray-drying unit producing 7.2 tons per hour of dried calcium based birch ore alternatively for alcohol fermented spruce rayon grade spent sulfite liquor solids containing 6% moisture and exhibiting product pHs of 4.3, was injected immediately below the drying chamber sufficient finely ground calcium hydroxide (99% passing 0.09 mm mesh, 72% CaO) to increase the respective CaO contents of the two different furnishes by 0.75, 1.5, 2.25 and 3.0% respectively.

The above two raw material furnishes virtually represent extremes in caking tendency. The birch based material contains close to 50% carbohydrate matter, is difficult to dry and cannot be run normally in the untreated state via storage bins. Moreover, while exhibiting an excellent nutrient value its binding properties are also poor. The fermented spruce based material, on the other hand, contains only 25% carbohydrates, handles relatively easily and constitutes a relatively good binder.

On treatment with hydrated lime the caking and binding properties of both type materials improve with increasing CaO content. Thus, it proves possible to raise the handling and binding properties of the original birch furnish to levels normally associated with spruce based products without sacrificing its advantageous nutrient value while the properties of spruce furnish are enhanced to the extent that it becomes virtually non-caking under any conditions. Reduction in caking properties is again found to be accompanied by an increase in binding properties manifesting itself in that treated spruce based products produce equally effective binding at lower rates of addition and that they allow a substantially higher molasses content in pellets as compared to untreated material; molasses, as is well known, constitute a low-cost energy source for ruminant feeds but its rate of inclusion is limited owing to its tendency to give rise to soft and sticky pellets.

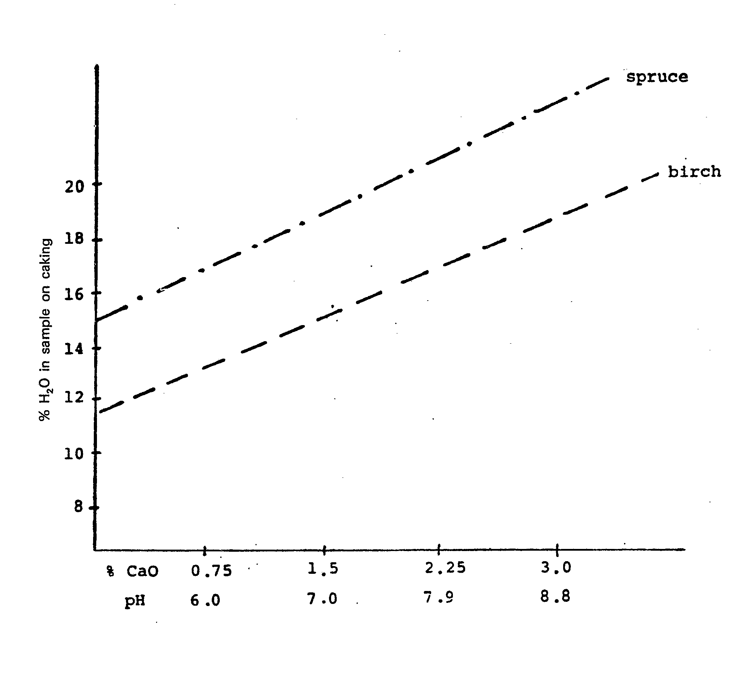

The caking characteristics of the binders are shown in the appended Figure (representing caking as a function of the moisture content and pH, respectively CaO-addition) of the preparations. The samples were kept for up to two weeks in an exsiccator at 23°C over a 21% sulfuric acid solution representing a relative humidity of 89%. They were judged failed when a hard crust began to develop on the surface of the samples.

From the Figure it is seen that the tolerance limit for moisture of the samples is significantly extended on addition of hydrated lime. Moreover, it is evident that birch based materials require a product pH of approx. 2 units over and above that for spruce based grade in order to match the latter with regard to moisture tolerance.

An important aspect of our invention is that it eliminates the need for any pH adjustments in the liquid state. In order to achieve a minimum product pH of 4.3 it was in the past frequently necessary to raise the pH of the sulfite spent liquor before drying. We have now found that such pH adjustments are accompanied by a loss in bulk densities for the spray-dried product. Thus, a rayon grade birch sulfite spent liquor was found to yield a product exhibiting a bulk density of 680 g/l when dried at pH 3.1, while similar type of material containing an extra 1.2% of CaO and exhibiting a pH of 4.3 yielded a density of only 510 g/l on a comparable basis. Dusting with CaO to the extent of increasing the CaO levels of the products by 4.2 and 3.0% respectively (product pH's of 9.1 and 8.8 respectively) raised the bulk densities by an additional 60 g/l in both bases. Differences in lumping could not be observed for the two product versions.

For pelleting purposes the feed ingredients are blended evenly and binder is added at a rate of about 3/4 to 12% on a dry weight basis. Preferably the binder, however, is added to the feed blend at a rate of 1 1/2 to 6% on a dry weight basis.

The pelleting in itself can be carried out in any suitable pelleting device or by using other conventional agglomerating procedures.

The invention is not only applicable to the large range of compound feed ratios but can be advantageously used for producing hay, grass meal and alfalfa pellets.

### Claims

1. Method of preparing a non-caking lignosulfonate binder for pelleting feedstuffs, characterised in that dried calcium, magnesium or sodium based residual pulping liquor obtained in the sulfite cooking of wood, or a mixture thereof, is compounded with a sufficient amount of calcium hydroxide and/or calcium oxide containing material to yield a product pH greater than 5 as measured in 5% aqueous solution at room temperature.

2. Method according to Claim 1, characterized in that the amount of calcium compound added, calculated as CaO, is 1 to 3% by weight.

3. Method according to Claim 1, characterised in that sufficient calcium compound is added to give a product pH of 6 to 9 as measured in a 5% aqueous solution.

4. Method according to Claim 1, characterized in that calcium hydroxide is added.

5. Method according to Claim 1, characterized in that the addition of calcium compound takes place in conjunction with the spray-drying of the sulfite spent liquor.

### Patentansprüche

1. Verfahren zur Herstellung von nichtbackenden Ligninsulfonat-Bindemitteln für die Pellettisierung von Futtermitteln, dadurch gekennzeichnet, daß man den getrockneten Rückstand einer Pulpenlauge auf Calcium-, Magnesium- oder Natriumbasis, erhalten beim Sulfitaufschluß von Holz oder einer Mischung hiervon, mit einer ausreichenden Menge eines Calciumhydroxid — und/oder Calciumoxid enthaltenden Materials vermischt, so daß ein Produkt mit einem pH-Wert von größer als 5, gemessen in einer 5%igen wäßrigen Lösung bei Raumtemperatur, erhalten wird.

2. Verfahren nach Anspruch 1, dadurch gekennzeichnet, daß die Menge an zugesetzter Calciumverbindung, berechnet als CaO, 1 bis 3 Gew.-% beträgt.

3. Verfahren nach Anspruch 1, dadurch gekennzeichnet, daß man eine ausreichende Menge an Calciumverbindung zusetzt, um ein Produkt mit einem pH-Wert von 6 bis 9, gemessen in einer 5%igen wäßrigen Lösung zu erhalten.

4. Verfahren nach Anspruch 1, dadurch gekennzeichnet, daß man Calciumhydroxid zusetzt.

5. Verfahren nach Anspruch 1, dadurch gekennzeichnet, daß der Zusatz der Calciumverbindung in Verbindung mit der Sprühtrocknung der Sulfitablauge erfolgt.

### Revendications

1. Procédé pour préparer un liant non agglutinant à base de lignosulfonate pour pastiller des aliments pour animaux, caractérisé en ce qu'on combine une lessive sulfitique résiduaire calcique, magnésique ou sodique, déshydratée, dérivant de la cuisson bisulfitique du bois ou d'un mélange de telles lessives déshydratées, avec une quantité d'une matière contenant de l'hydroxyde de calcium et/ou de l'oxyde de calcium suffisante pour qu'on obtienne un pH du produit supérieur à 5, cette valeur étant mesurée pour une solution aqueuse à 5% à la température ordinaire.

2. Procédé selon la revendication 1, caractérisé en ce que la quantité de matière calcique ajoutée, exprimée en CaO, est comprise entre 1 et 3% en poids.

3. Procédé selon la revendication 1, caractérisé en ce qu'on ajoute suffisamment de matière calcique pour qu'on obtienne un pH du produit de 6 à 9, cette valeur étant mesurée pour une solution aqueuse à 5%.

4. Procédé selon la revendication 1, caractérisé en ce qu'on ajoute de l'hydroxyde de calcium.

5. Procédé selon la revendication 1, caractérise en ce que l'addition de la matière calcique s'effectue conjointement au séchage par pulvérisation de la lessive sulfitique résiduaire.